# FASCICULE DE BREVET EUROPEEN

(11) **EP 1 830 117 B1**
(45) Date de publication et mention de la délivrance du brevet: **17.09.2008**
(21) Numéro de dépôt: 07300739.5
(22) Date de dépôt: 24.01.2007
(51) Int. Cl.: F16K 31/54

(54) **Actionneur de clapet coupe-feu**
Stellglied für Feuerklappe
Fire valve actuator

(30) Priorité: 03.03.2006 FR 0650749
(43) Date de publication de la demande: 05.09.2007
(73) Titulaire: Vraco, 38510 Morestel (FR)
(72) Inventeur: Cardon, Jacques, 71640 MERCUREY (FR)
(74) Mandataire: Herrburger, Pierre

(56) Documents cités:
- EP-A- 1 593 893
- WO-A-01/25661
- GB-A- 2 076 507

## Description

### Domaine de l'invention

La présente invention concerne un actionneur de clapet notamment de clapet coupe-feu mis en position d'armement et déclenché par un ordre de déclenchement associé à un événement, ayant un boîtier et un axe d'entraînement porté par le boîtier, solidaire du volet et relié à un ressort de rappel bandé par le mouvement de rotation de l'axe en position d'armement et rappelant le volet en position active et des organes de déclenchement commandés par des événements (température extérieure, température intérieure, déclenchement électrique, déclenchement manuel).

### Etat de la technique

Il existe différents types d'actionneurs de clapet coupe-feu destinés à commander la fermeture d'un clapet installé dans une conduite, par exemple une conduite de ventilation, lorsqu'un événement produit un ordre de déclenchement. Ces ordres de déclenchement peuvent être une élévation de température au-delà d'un seuil ou encore le déclenchement intentionnel, fait manuellement ou un déclenchement intentionnel télécommandé. Ces différents événements doivent pouvoir agir séparément pour assurer la fermeture du clapet.

Mais les actionneurs connus ont une structure relativement complexe et de ce fait coûteuse et dont la fiabilité est réduite du fait du grand nombre de pièces servant à la transmission du mouvement de commande du clapet ou volet de fermeture, à partir des différentes sources d'instructions.

Cette fiabilité est d'autant plus difficile à assurer qu'en principe un tel clapet coupe-feu ne fonctionne que très rarement, par exemple à l'occasion d'essais de sécurité.

Le document GB 2076507 décrit le préambule de la revendication 1.

### But de l'invention

La présente invention a pour but de développer un actionneur de clapet coupe-feu de structure simple et d'un fonctionnement fiable, permettant de recevoir des ordres de déclenchement associés à plusieurs événements extérieurs (tels qu'élévation de température dans une conduite ou à l'extérieur d'une conduite, actionnement manuel intentionnel ou actionnement télécommandé en fonction de paramètres, de dépassements de seuil ou d'une intention).

### Exposé et avantages de l'invention

A cet effet, la présente invention concerne un actionneur de clapet coupe-feu du type défini ci-dessus, caractérisé en ce qu'il comprend :
- un chariot guidé en translation,
   * solidaire en mouvement de l'axe d'entraînement par une liaison roue dentée/crémaillère,
   * muni d'une butée d'armement,
- un moyen d'armement relié au chariot par une liaison libérable dès que le chariot est en position d'armement,
- un levier d'indexage porté par le boîtier, coopérant avec la butée du chariot pour le retenir en position d'armement,
- un palonnier monté pivotant dans le boîtier, dont les extrémités sont soumises à l'action d'au moins un organe de déclenchement et coopérant avec le levier d'indexage pour le neutraliser en cas d'événement et libérer le chariot,
- un circuit de commande comportant un détecteur de courant et un circuit d'exploitation à seuil, le détecteur de courant détectant le courant de fonctionnement du moyen d'armement pour le comparer à un seuil et détecter ainsi la position de fin de course du moyen d'armement pour commander ensuite le mouvement inverse du moyen d'armement et le désolidariser du chariot.

L'actionneur de clapet selon l'invention tel que défini ci-dessus constitue un actionneur très compact et d'une structure relativement simple, garantie de fiabilité et de sécurité de fonctionnement. Cette simplicité de structure et de fonctionnement est liée à la combinaison du chariot et du palonnier qui, en fonction d'un événement agissant sur un organe de déclenchement, libère l'entraînement du volet par le ressort ou les ressorts en position armée.

Le rétablissement de la position d'armement se fait également de manière très simple par le circuit de commande qui utilise le moyen d'armement jusqu'à ce que le chariot soit remis dans sa position d'armement, c'est-à-dire accroché dans cette position, pour qu'ensuite le moyen d'armement puisse se désolidariser du chariot pour laisser le chariot exécuter son mouvement lorsqu'il est déclenché. Ce mode de mise en position d'armement améliore la sécurité de déclenchement de l'actionneur.

En outre, la simplicité et la robustesse de la structure de l'actionneur lui permettent d'être intégré dans des environnements exposés à des conditions de fonctionnement difficiles. Suivant une autre caractéristique, l'axe d'entraînement porte un bras dont l'extrémité est accrochée à un ressort de tension dont l'autre extrémité est reliée au boîtier. Cette liaison entre l'axe d'entraînement et le volet du clapet permet de réaliser séparément le clapet de l'actionneur ou de remplacer un éventuel actionneur défaillant ou encore d'installer un tel actionneur sur un clapet existant.

Suivant une autre caractéristique avantageuse, le chariot est guidé par un rail du boîtier.

Suivant une autre caractéristique, la liaison solidaire en mouvement entre l'axe et le chariot est réalisée par la roue dentée portée par l'axe du volet et une crémaillère portée par le chariot.

Suivant une autre caractéristique particulièrement avantageuse, le moyen d'armement comprend
- une coulisse du chariot, parallèle à la direction de translation du chariot et
- un moyen d'entraînement électrique à vis portant un coulisseau engagé dans la coulisse pour tirer le chariot dans sa position d'armement puis revenir en arrière pour ne pas retenir le chariot et lui permettre d'exécuter le mouvement de déclenchement.

Suivant l'invention, le levier d'indexage est tiré en position de verrouillage par un ressort de rappel. Suivant une autre caractéristique, le chariot comporte un chemin de came coopérant avec une came portée par le palonnier pour repousser l'un des organes de déclenchement lors du mouvement d'armement du chariot.

Suivant une autre caractéristique, les organes de déclenchement sont constitués par un poussoir poussé par un ressort vers le palonnier et retenu en position neutre par un élément d'actionnement libérant le poussoir agissant sur le palonnier dans le sens du déclenchement, et constitué par :
- un fusible exposé à la température extérieure ou intérieure à surveiller, la destruction du fusible libérant le poussoir,
- une soupape électromagnétique collée en l'absence/présence de courant et libérant le poussoir par une commande électrique extérieure, opposée,
les différents organes de déclenchement agissant indépendamment les uns des autres sur le palonnier.

Suivant une autre caractéristique, l'organe de déclenchement est constitué par un poussoir poussé par un ressort contre une butée retenant le poussoir en position neutre et par un élément d'actionnement constitué par une poignée permettant de tirer le poussoir contre le ressort et agir sur le palonnier.

Suivant une autre caractéristique de l'organe de déclenchement, le poussoir est porté par une tige montée dans le boîtier, le ressort étant monté sur la tige entre le poussoir et l'élément d'actionnement soumis à l'événement extérieur.

Enfin, pour régulariser le mouvement et protéger le clapet contre un mouvement de fermeture trop violent, le chariot est relié à un amortisseur fixé au boîtier pour régulariser la vitesse de déplacement du chariot.

L'invention concerne également un procédé de commande d'un actionneur de clapet, ce procédé étant caractérisé en ce qu'après remise en position neutre des organes de déclenchement on commande le vérin électrique pour tirer le chariot en position d'armement jusqu'au verrouillage du chariot par le levier d'indexage puis on libère le mouvement du chariot en déplaçant le galet du vérin qui a servi à conduire le chariot en position d'armement, jusqu'à une position neutre, n'interdisant pas le mouvement de déclenchement du chariot.

Enfin, l'invention concerne également un circuit de commande pour actionner le clapet ou le remettre en position d'armement, ce circuit de commande se composant d'un circuit électrique relié à un capteur d'intensité électrique surveillant l'intensité électrique demandée par le moteur du moyen de remise en position d'armement.

### Dessins

La présente invention sera décrite ci-après de manière plus détaillée à l'aide d'un mode de réalisation d'un actionneur de clapet coupe-feu représenté schématiquement dans les dessins annexés dans lesquels :
- la figure 1 est une vue de face de l'actionneur,
- la figure 2 est une vue de côté de l'actionneur installé sur le caisson d'un clapet coupe-feu représenté schématiquement et partiellement,
- les figures 3, 4 sont des vues en coupe par des plans parallèles au plan de la figure 2, à travers l'actionneur, montrant différents organes de déclenchement,
- la figure 5 est une vue de face du chariot,
- la figure 6 est une vue en coupe selon le plan VI-VI de la figure 5,
- la figure 7 est une vue en plan du levier d'indexage,
- la figure 8 est une vue de côté du levier d'indexage,
- les figures 9A, 9B sont des vues de face de l'actionneur correspondant respectivement à la position du chariot pour le clapet fermé et pour le clapet ouvert,
- les figures 10A-10D représentent différentes positions du chariot et des autres organes de l'actionneur, à savoir :

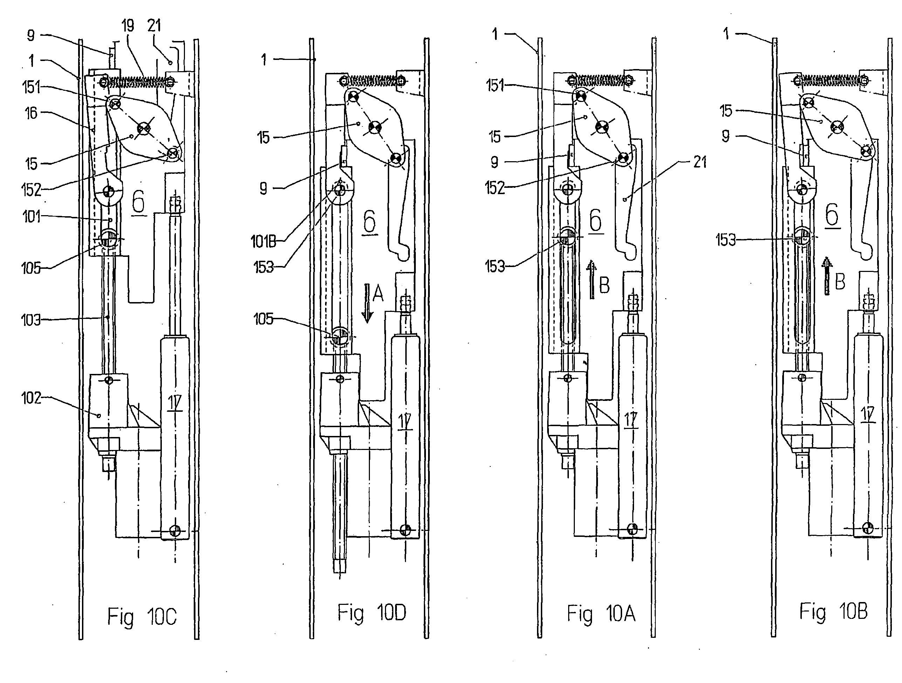

   * la figure 10A représente la position de déclenchement,
   * la figure 10B montre la position de l'actionneur lorsque le clapet est fermé,
   * la figure 10C montre la position de réarmement avec remise en place du chariot,
   * la figure 10D montre la fin du mouvement de réarmement avec retour du vérin électrique en position de dégagement du chariot.

### Description du mode de réalisation

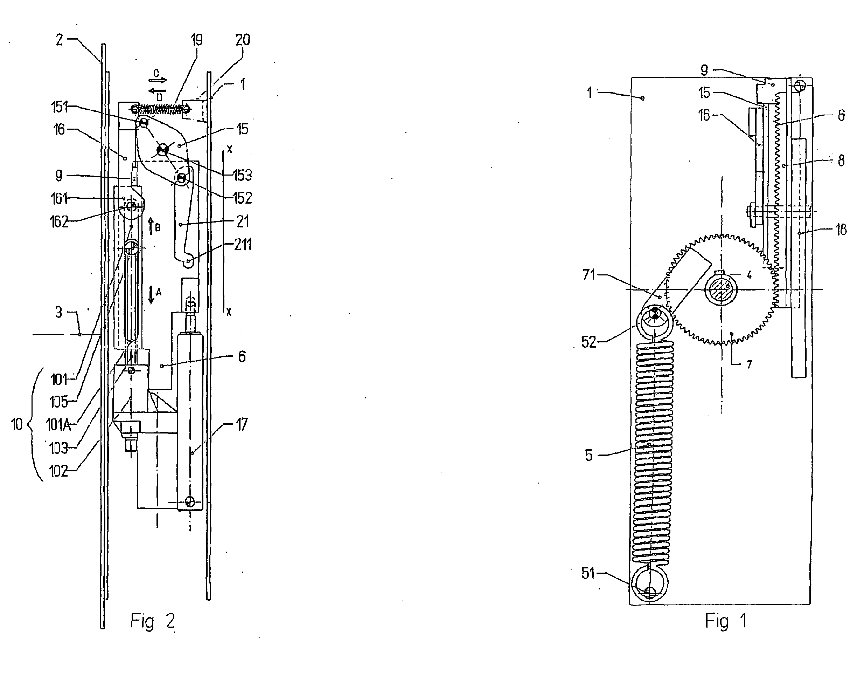

Selon les figures, l'invention concerne un actionneur de clapet logé dans un boîtier 1 fixé contre le bâti 2 d'un clapet, par exemple d'un clapet coupe-feu (figures 1, 2). Ce bâti est simplement représenté par sa paroi et le volet du clapet est figuré par l'axe qui le porte ; il est relié à l'axe d'entraînement 4 de l'actionneur.

L'axe d'entraînement 4 (figure 2) porté par le boîtier 1 est relié à un ressort de rappel 5 bandé par le mouvement de rotation de l'axe 4 mis en position d'armement. Ce ressort 5 rappelle le volet, c'est-à-dire le fait passer en position active qui est dans ce cas la position de fermeture.

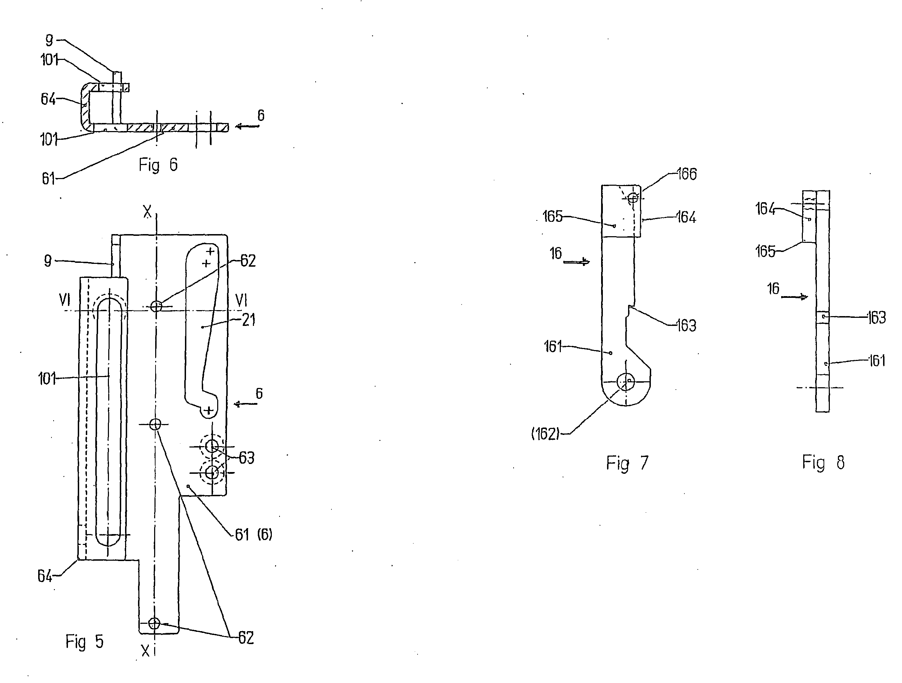

L'actionneur comporte un chariot 6 guidé en translation (figures 1 et 2) et solidaire en mouvement de l'axe d'entraînement 4 par une liaison réalisée par une roue dentée 7 portée par l'axe d'entraînement 4 et engrenant avec une crémaillère 8 du chariot. Le chariot 6 est muni d'une butée d'armement 9 (figures 1, 5) et d'un moyen d'armement 10. Ce moyen 10 est relié au chariot 6 par une liaison libérable dès que le chariot est en position d'armement (figure 1, figures 10A-D).

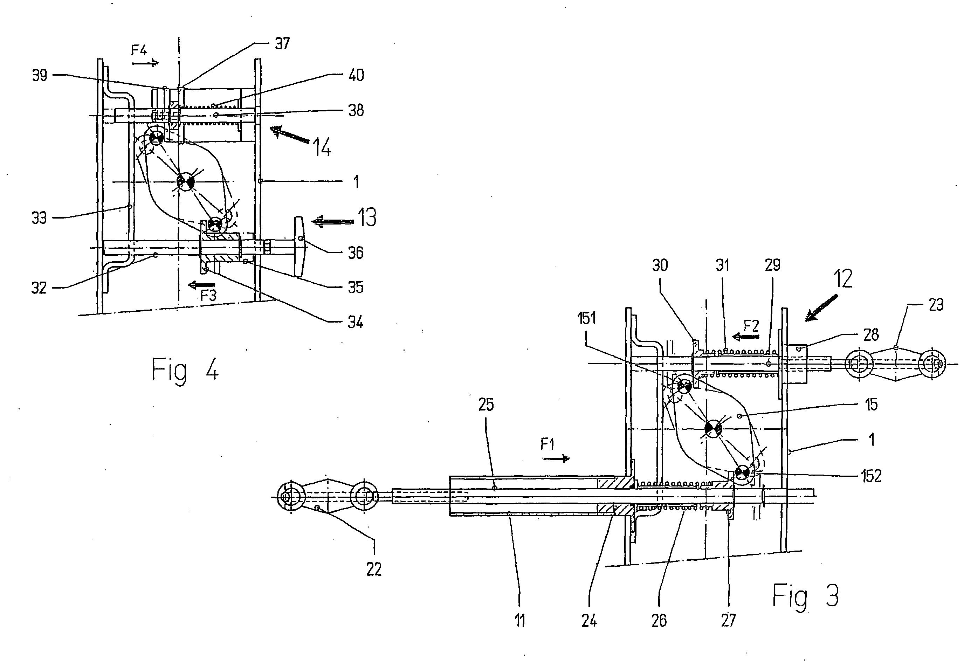

L'actionneur comporte des organes de déclenchement 11, 12, 13, 14 (figures 3, 4) commandés par des événements tels que le dépassement d'un seuil par la température extérieure ou la température intérieure, par exemple dans l'environnement du clapet ou dans la conduite équipée du clapet pour détecter la température de gaz, de fumées ou encore un organe de déclenchement manuel permettant à un opérateur de fermer le clapet à un moment donné ou de télécommander sa fermeture par un déclenchement électrique.

L'actionneur comporte un palonnier 15 (figures 1, 3, 4) monté pivotant dans le boîtier 1 et dont les extrémités 151, 152 sont soumises à l'action du ou des organes de déclenchement 11-14 (figures 3, 4). Ce palonnier 15 coopère avec le levier d'indexage 16 (figure 1, figures 7 et 8) pour le neutraliser en cas d'événement(s). Cette neutralisation libère le chariot 6 qui, entraîné par la traction du ressort de rappel 5, agit sur l'axe d'entraînement 4 par l'intermédiaire de la roue dentée 7 engrenant avec la crémaillère 8 solidaire du chariot 6.

En position d'armement, le déclenchement de l'actionneur, au moins par certains organes de déclenchement 11, 12, se fait de façon autonome indépendamment d'une source d'énergie extérieure. Toutefois, le réarmement du chariot 6 se fait avec apport d'énergie extérieure. Ce réarmement est commandé par un circuit de commande non représenté, qui commande l'alimentation du moyen d'armement 10 comme cela sera décrit en relation avec les figures 10A-10D.

Les différents éléments composant l'actionneur seront décrits ci-après de manière plus détaillée à l'aide des figures.

Selon la figure 1 qui est une vue de face de l'actionneur, le boîtier 1 loge l'axe d'entraînement 4 du volet du clapet. Cet axe, perpendiculaire au plan de la figure 1, porte une pièce d'accouplement non représentée permettant de relier l'axe d'entraînement 4 à l'axe 3 du volet.

L'axe d'entraînement porte solidairement en rotation la roue dentée 7 engrenant avec la crémaillère 8 portée par le chariot 6 guidé par des rails 18 du boîtier 1 et assurant le mouvement d'ouverture et de fermeture du clapet. Le chariot 6, représenté séparément aux figures 5 et 6, comporte la butée d'armement 9 ainsi que le moyen d'armement 10 formé d'une coulisse 101 d'axe parallèle à l'axe de translation XX et d'un moyen d'entraînement électrique 102 à vis 103 ou vérin électrique avec une pièce en forme d'écrou traversée par la vis 103. L'écrou fixe en translation est entraîné en rotation et la vis 103 est bloquée en rotation mais libre en translation.

Cette vis 103, parallèle à l'axe de translation (XX) du chariot 6, est reliée au chariot par un galet 105 installé dans la coulisse 101. Le galet 105 en forme de cylindre de section circulaire peut être déplacé dans la coulisse 101 et lorsqu'il arrive en butée contre la première extrémité 101A de la coulisse située du côté du moteur 102, il permet de tirer le chariot 6 dans la direction A pour le réarmer et selon les conditions d'entraînement et de fonctionnement décrites ensuite à l'aide des figures 10A-10D.

Le chariot 6 est également muni d'une découpe 16 en forme de chemin de came recevant une came portée par l'extrémité 152 du palonnier 15 et autorisant le mouvement du palonnier ou rappelant celui-ci en position d'armement ainsi que l'un des organes de déclenchement comme cela sera détaillé ensuite.

Un amortisseur 17 relie le chariot 6 au boîtier 1 de manière à régulariser son mouvement de déclenchement et de déplacement dans la direction B lorsque le chariot 6 libéré, est soumis à la traction exercée par le ressort de rappel 5 et transmise par la liaison roue dentée/crémaillère 7, 8. La tête de l'amortisseur 17 est fixée au chariot 6.

Le ressort de rappel 5 est accroché par une extrémité 51 au boîtier 1 et par son autre extrémité 52 à un levier 71 solidaire de l'axe d'entraînement 4. Ce levier 71 est par exemple fixé à la roue dentée 4. Il pourrait également être fixé directement à l'axe d'entraînement. Pour réduire l'encombrement de l'actionneur et disposer d'un couple important pour fermer le volet, le ressort 5 est dédoublé.

Le ressort 5 est bandé lorsque l'actionneur est en position d'armement, dans laquelle l'axe d'entraînement 4 est bloqué du fait de l'engrènement de sa roue dentée 7 avec la crémaillère 8 du chariot 6, lui-même bloqué. Ce n'est que lorsque le chariot 6 est libéré que le ressort de rappel 5 peut exercer un couple et tourner l'axe d'entraînement 4 pour fermer le volet.

Le chariot 6 est bloqué en position d'armement par le levier d'indexage 16 (figures 1, 2, 7, 8), monté pivotant à une extrémité 161 sur un axe 162 traversant la coulisse 101 du chariot 6 et constituant ainsi la butée de fin de course du chariot tiré dans la direction A vers sa position d'armement par le moyen d'armement 10.

Ce levier 16 du second genre est rappelé en position de verrouillage par un ressort 19 accroché à un point fixe 20 du boîtier 1.

Le levier 16 comporte une butée de verrouillage formée par un décrochement et une surface d'appui 164 pour l'extrémité 151 en forme d'axe du palonnier 15. Le levier 16 est tiré dans la direction C par son ressort de rappel 19 alors que le palonnier 15, commandé par un organe de déclenchement 11-14, a tendance à pousser le levier 16 dans la direction opposée D pour dégager la butée 163 de celle (9)du chariot 6 et libérer le mouvement de celui-ci dans la direction B.

Les événements susceptibles de déclencher l'actionneur sont transmis par les organes de déclenchement 11-14 au palonnier 15 porté par un axe 153 du boîtier. Ce palonnier 15, en forme de losange, a deux extrémités 151, 152 dont l'une 151, la première (figure 2) s'appuie par l'intermédiaire d'un axe contre la surface d'appui 164 du levier d'indexage 16 et l'autre 152, la seconde, porte un galet ou un axe venant dans un chemin de came 21 du chariot. Le palonnier 15 est normalement tenu en position neutre par les organes de déclenchement 11-14, également en position d'attente, qui coopèrent avec lui. Ce n'est qu'en cas d'événement agissant sur l'un ou éventuellement plusieurs organes de déclenchement 11-14 que le palonnier 15 est basculé dans la direction E pour pousser contre le levier d'indexage 16 et l'écarter dans la direction D contre l'action de son ressort de rappel 19, de façon à dégager la butée 163 du levier de celle (9) du chariot 6 et libérer le chariot.

Les figures 3, 4 sont des vues en coupe du boîtier 1, faites parallèlement au plan de la figure 2 et montrant les organes de déclenchement 11, 12.

Selon la figure 3, les deux organes de déclenchement à fusibles 11, 12 sont situés de part et d'autre du boîtier. L'un des organes de déclenchement 11 comporte un fusible 22 venant à l'intérieur du châssis du clapet et l'autre 12, un fusible 23exposé à l'extérieur du châssis du clapet, pour être soumis respectivement à la température à l'intérieur de l'enceinte du clapet et à celle à l'extérieur de cette enceinte.

L'organe de déclenchement 11 de la température intérieure est constitué par un palier de guidage 24 fixé à la paroi du boîtier 1 et traversé par une tige de commande 25 dont une extrémité est reliée à l'extrémité du fusible 22 et l'autre est portée par la paroi opposée du boîtier ; le fusible 22 est relié à un point fixe. Cette tige 25 est poussée dans la direction F1 par un ressort 26 installé entre son palier 24 et une collerette 27 solidaire de la tige et venant contre ou près de la seconde extrémité 152 du palonnier 15. Le fusible 22 intact retient la tige 25 dans la position représentée à la figure 3 de sorte que celle-ci ne peut pousser l'extrémité 152 du palonnier 15. Ce n'est que lorsque le fusible 22 est ouvert que le ressort 26 pousse la collerette 27 portée par la tige 25 et fait basculer le palonnier 15 vers la position représentée en trait interrompu pour libérer le chariot.

L'autre organe de déclenchement 12 à fusible exposé à la température extérieure est de conception analogue ; il se compose d'un palier 28fixé à la paroi du boîtier 1 et traversé par un axe 29 dont une extrémité est reliée à une extrémité du fusible 23 par ailleurs accroché à un point fixe. Cette tige 29 porte une collerette 30 et un ressort de compression 31 engagé sur la tige et interposé entre la collerette 30 et la paroi intérieure du boîtier 1 de manière à pousser la collerette dans la direction F2. Lorsque le fusible 23 n'est pas déclenché, la tige 29 est retenue contre la poussée du ressort 31, dans la position représentée. Dans cette position, la collerette 30 se trouve en regard de la première extrémité 151 du palonnier 15. Lorsque le fusible 23 est ouvert, le ressort 31 pousse la collerette 30 et ainsi le palonnier 15 pour le faire pivoter et venir dans la position représentée en pointillés, avec le même effet sur le levier d'encliquetage 16 que celui décrit ci-dessus, libérant le chariot 6.

La figure 4 montre deux autres organes de déclenchement 13, 14 situés dans un plan différent de celui de la figure 3 mais toujours parallèle au plan de la figure 2.

Le troisième organe de déclenchement 13 est un organe manuel formé d'une tige 32 montée coulissante dans deux orifices alignés réalisés l'un dans une paroi du boîtier 1, l'autre dans une paroi intérieure 33. Cette tige 32 porte une collerette de butée 34 et un ressort de compression 35 pousse la tige 32 dans la direction F3. La collerette 34 est en regard de la seconde extrémité 152 du palonnier. Lorsqu'on tire la manette 36 dans la direction opposée à la direction F3 on comprime le ressort et on fait basculer le palonnier 15 pour déclencher l'actionneur.

Le quatrième organe de déclenchement 14 est constitué par une soupape magnétique 37 non détaillée, portant une tige 38 munie d'une collerette 39 et soumise à l'action d'un ressort de compression 40. Lorsque la soupape magnétique 37 est collée, la tige 38 retenue dans la direction F4 contre l'action du ressort 40. Lorsque la soupape magnétique est libérée par l'envoi d'un signal électrique (ou inversement, par la coupure du courant) suivant le mode de fonctionnement de la soupape 37, la tige poussée par le ressort 40 dans la direction opposée à la direction F4 agit sur la première extrémité 151 du palonnier et le fait basculer vers la position représentée en trait interrompu pour libérer le levier d'indexage 16.

En résumé, les quatre organes d'actionnement 11-14 présentés aux figures 3, 4 agissent dans le même sens sur le palonnier 15 et aucun organe de déclenchement n'empêche le mouvement de l'autre dans le sens de la libération de l'actionneur. Bien que la mise en oeuvre d'un seul organe de déclenchement suffise à déclencher l'actionneur, plusieurs organes de déclenchement peuvent également agir simultanément.

Les figures 5 et 6 montrent la forme du chariot constitué par une pièce en tôle, pliée, poinçonnée, percée, dont le fond reçoit la crémaillère réalisée séparément. Le fond 61 est muni de trois orifices 62 alignés dans l'axe de translation XX du chariot pour la fixation de la crémaillère. Le fond comporte également deux perçages 63 pour fixer la tête de l'amortisseur 17. La coulisse 101 est découpée dans une patte 64 repliée deux fois formant deux coulisses identiques 101 superposées (figure 6), ce qui rigidifie la coulisse et garantit le guidage du galet 105 du moyen d'armement.

La butée 9 du chariot est constituée par une patte recourbée à l'équerre.

Les figures 7 et 8 montrent la forme du levier d'indexage 16 constitué par une pièce en tôle munie d'un perçage 162 pour recevoir l'axe de pivotement. La butée 163 est un décrochement dans le côté du levier. Au-delà de cette butée se trouve une plaquette 165 constituant la surface d'appui de la première extrémité 151 du palonnier 15. Il est également prévu un orifice 166 pour recevoir une tige servant à l'accrochage du ressort de rappel 19. La position de la butée 163 du levier d'indexage 16 par rapport à son axe et par suite la position du levier d'indexage 16 par rapport au chariot 6 est très avantageuse pour le fonctionnement et le déclenchement car la butée 163 du levier d'indexage 16, et celle (9) du chariot 6 sont pratiquement alignées sur l'axe de la coulisse 101, l'axe du levier d'indexage étant lui-même dans l'axe de la coulisse.

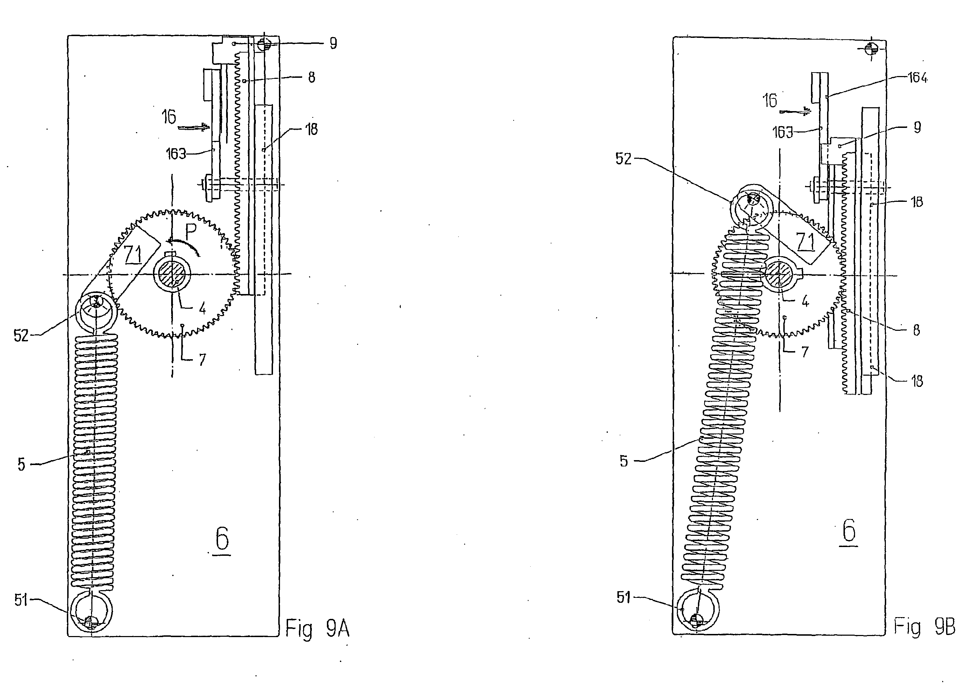

Les figures 9A, 9B représentent deux positions extrêmes du chariot.

La figure 9A montre le chariot 6 en position actionnée, c'est-à-dire libérée. Le ressort 5 a tiré sur son levier 71 pour faire pivoter l'axe d'entraînement 4 dans la direction P, contraire au sens des aiguilles d'une montre, du fait de la libération du chariot. Le chariot est ainsi venu en position haute selon l'orientation de la figure 9A. Dans cette position, la butée 9 du chariot est passée au-delà de la butée 163 du levier d'indexage 16 et le volet du clapet est fermé.

La figure 9B montre la position d'armement de l'actionneur. Dans cette position, le ressort 5 étiré, c'est-à-dire bandé, et le chariot 6 est descendu en position basse. Sa butée 9 est accrochée derrière la butée 163 du levier d'indexage 16.

Les figures 10A-10D montrent quatre positions caractéristiques de l'actionneur.

La figure 10A est par convention la position de départ pour la description du fonctionnement de l'actionneur, qui est la position d'armement. Dans cette position, le chariot 6 est retenu par le verrouillage du levier d'indexage 16 accroché au chariot contre l'action du ressort 5 qui tend à le pousser dans la direction de la flèche B. Le palonnier 15 occupe sa position neutre. Sa première extrémité 151 est appliquée sans la pousser, contre la surface d'appui 164 du levier d'indexage 16 et la seconde extrémité 152 est logée dans la partie supérieure du chemin de came 21. Le moyen d'armement 10, c'est-à-dire le galet 105 de la vis 103, se trouve dans une position intermédiaire dans la coulisse 101 sans être en appui contre son extrémité inférieure 101A.

La figure 10B montre la position de déclenchement. Le palonnier 15 est basculé dans sa position de déclenchement (représentée ici en trait plein). Sa première extrémité 151 a poussé le levier d'indexage 16 pour l'écarter et dégager sa butée 163 de la butée 9 du chariot 6 qui peut remonter dans la direction de la flèche B, entraîné par le ressort de traction 5 transmettant son effort par l'intermédiaire de la roue dentée 7 et de la crémaillère 8.

La figure 10C montre la position du clapet fermé dans laquelle arrive le chariot 6 à la fin de sa course après le déclenchement. Cette position de fin de course correspond par exemple à la position du galet 105 du moyen d'armement 10 contre la première extrémité 101A de la coulisse 101. Le passage de la position du chariot 6 de la figure 10A à celle de la figure 10C s'est fait par translation et le mouvement a été régularisé par l'amortisseur 17. Dans cette position, la seconde extrémité 152 du palonnier 15 est au fond de la partie coudée 211 du chemin de came 21.

A partir de cette position (clapet fermé), pour réarmer l'actionneur on suppose que le ou les organes de déclenchement 11, 12 à l'origine du mouvement du chariot 6 ont été remis en position neutre. Dans le cas où le fusible a été remplacé par un nouveau fusible, de sorte que les organes de déclenchement n'agissent plus sur le palonnier 15, celui-ci peut ainsi être repoussé dans sa position neutre par le ressort 19 du levier d'indexage 16, une fois que la seconde extrémité 152 du palonnier sera libre dans la coulisse 21 formant le chemin de came.

Pour réarmer le circuit de commande on actionne le vérin électrique 102 de façon à tirer le chariot 6 dans la direction de la flèche A jusqu'à ce que le chariot arrive en fin de course, par la venue en butée de la seconde extrémité 101B de la coulisse contre l'axe 162 du levier d'indexage 16 (ou toute autre butée selon le mode de réalisation). Cette position est détectée par un détecteur d'intensité (non représenté) du courant électrique demandé par le vérin électrique 102. Lorsque cette intensité dépasse un certain seuil, cela signifie que le vérin électrique rencontre un obstacle qui lui interdit d'avancer.

Cette position correspond sensiblement à la position d'accrochage du levier d'indexage 16 contre la butée 9 du chariot, mouvement du levier 16 qui a été autorisé par le basculement du palonnier 15 quittant sa position de déclenchement pour venir en position neutre. Ce mouvement du palonnier est autorisé par la forme du chemin de came 21 du chariot 6.

Lorsque le chariot est arrivé dans cette position de fin de course, le circuit de commande inverse le sens de fonctionnement du vérin 102 de manière à faire remonter son galet 105 dans la coulisse 101 du chariot 6 jusqu'à se trouver dans la position représentée à la figure 10A. L'actionneur est ainsi réarmé et prêt à un nouveau déclenchement.

## Revendications

1. Actionneur de clapet notamment de clapet coupe-feu mis en position d'armement et déclenché par un ordre de déclenchement associé à un événement, ayant un boîtier (1) et un axe d'entraînement (4) porté par le boîtier (1), solidaire du volet (3) et relié à un ressort de rappel (5) bandé par le mouvement de rotation de l'axe (4) en position d'armement et rappelant le volet en position active et des organes de déclenchement (11-14) commandés par des événements tels que la température extérieure, température intérieure, déclenchement électrique, déclenchement manuel, comprenant
un chariot (6) guidé en translation, solidaire en mouvement de l'axe d'entraînement (4) par une liaison roue dentée/crémaillère (7, 8), **caractérisé en ce que** le chariot est muni d'une butée d'armement (9), et **en ce que** l'actionneur comprend
- un moyen d'armement (10) relié au chariot (6) par une liaison libérable (101, 102, 105) dès que le chariot (6) est en position d'armement,
- un levier d'indexage (16) porté par le boîtier (1), coopérant avec la butée (9) du chariot (6) pour le retenir en position d'armement,
- un palonnier (15) monté pivotant dans le boîtier (1), dont les extrémités (151, 152) sont soumises à l'action d'au moins un organe de déclenchement (11-14) et coopérant avec le levier d'indexage (16) pour le neutraliser en cas d'événement et libérer le chariot,
- un circuit de commande comportant un détecteur de courant et un circuit d'exploitation à seuil, le détecteur de courant détectant le courant de fonctionnement du moyen d'armement (10) pour le comparer à un seuil et détecter ainsi la position de fin de course du moyen d'armement (10) et du chariot (6) pour commander ensuite le mouvement inverse du moyen d'armement (10) et le désolidariser du chariot (6).

2. Actionneur selon la revendication 1,
**caractérisé en ce que**
l'axe d'entraînement (4) porte un bras (71) dont l'extrémité est accrochée au ressort (5) de tension dont l'autre extrémité est reliée au boîtier (1).

3. Actionneur selon la revendication 1,
**caractérisé en ce que**
le chariot (6) est guidé par un rail du boîtier.

4. Actionneur selon la revendication 1,
**caractérisé en ce que**
la liaison solidaire en mouvement entre l'axe (4) et le chariot (6) est réalisée par la roue dentée (7) portée par l'axe (4) d'entraînement et une crémaillère (8) portée par le chariot (6).

5. Actionneur selon la revendication 1,
**caractérisé en ce que**
le moyen d'armement (10) comprend
- une coulisse (101) du chariot (6), parallèle à la direction de translation (XX) du chariot et
- un moyen d'entraînement électrique (102, 103) à vis portant un coulisseau (105) engagé dans la coulisse (101) pour tirer le chariot (6) dans sa position d'armement puis revenir en arrière pour ne pas retenir le chariot (6) et lui permettre d'exécuter le mouvement de déclenchement.

6. Actionneur selon la revendication 1,
**caractérisé en ce que**
le levier d'indexage (16) est tiré en position de verrouillage par un ressort (19).

7. Actionneur selon la revendication 1,
**caractérisé en ce que**
le chariot (6) comporte un chemin de came (21) coopérant avec une came portée par le palonnier (15) pour repousser l'un des organes de déclenchement (14) lors du mouvement d'armement du chariot (6).

8. Actionneur selon la revendication 1,
**caractérisé en ce que**
les organes de déclenchement (11, 12, 14) sont constitués par un poussoir (27, 30) poussé par un ressort (26, 31) vers le palonnier (15) et retenu en position neutre par un élément d'actionnement (22, 23) libérant le poussoir agissant sur le palonnier (15) dans le sens du déclenchement, et constitué par :
- un fusible (22, 23) exposé à la température extérieure ou intérieure à surveiller, la destruction du fusible libérant le poussoir,
- une soupape électromagnétique (37) collée en l'absence/présence de courant et libérant le poussoir (39) par une commande électrique extérieure, opposée,
les différents organes de déclenchement (11, 12, 14) agissant indépendamment les uns des autres sur le palonnier (15).

9. Actionneur selon la revendication 1,
**caractérisé en ce que**
l'organe de déclenchement (13) est constitué par un poussoir poussé (34) par un ressort (35) contre une butée retenant le poussoir en position neutre et par un élément d'actionnement (36) constitué par une poignée permettant d'actionner le poussoir contre le ressort et agir sur le palonnier (15).

10. Actionneur selon les revendications 8 et 9,
**caractérisé en ce que**
le poussoir est porté par une tige (25, 29, 32, 38) montée dans le boîtier (1), le ressort étant monté sur la tige entre le poussoir et l'élément d'actionnement soumis à l'événement extérieur.

11. Actionneur selon la revendication 1,
**caractérisé en ce que**
le chariot est relié à un amortisseur fixé au boîtier pour régulariser la vitesse de déplacement du chariot.

12. Procédé de commande d'un actionneur de clapet, notamment de clapet coupe-feu, selon l'une des revendications 1 à 11,
**caractérisé en ce qu'**
après remise en position neutre des organes de déclenchement on commande le vérin électrique pour tirer le chariot en position d'armement jusqu'au verrouillage du chariot par le levier d'indexage puis on libère le mouvement du chariot en déplaçant le galet du vérin qui a servi à conduire le chariot en position d'armement, jusqu'à une position neutre, n'interdisant pas le mouvement de déclenchement du chariot.

## Claims

1. Actuator of a valve, in particular a fire damper, which is moved into the set position and triggered by a command associated with an event, with a casing (1) and a drive shaft (4) borne by the casing (1), joined to the flap (3) and connected to a return spring (5) which is tensed by the movement of the shaft (4) as it rotates into the set position and returns the flap into an active position, and trigger elements (11-14) controlled by events such as the external temperature, internal temperature, electrical triggering, manual triggering, comprising a carriage (6) guided in translation which moves in unison with the drive shaft (4) via a toothed wheel/rack link (7, 8), **characterised in that** the carriage is provided with a setting stop (9) and the actuator comprises
- a setting means (10) linked to the carriage (6) by a link (101, 102, 105) which can be released as soon as the carriage (6) is in the set position,
- an indexing lever (16) supported by the casing (1), co-operating with the stop (9) of the carriage (6) in order to hold it in the set position,
- a crossbar (15) mounted so as to pivot in the casing (1), the ends (151, 152) of which are acted on by at least one trigger element (11-14) and co-operating with the indexing lever (16) in order to neutralise it if an event occurs and release the carriage,
- a control circuit comprising a current detector and a circuit operating on the basis of a threshold, which current detector detects the operating current of the setting means (10) in order to compare it with a threshold and thus detect the end of travel position of the setting means (10) and the carriage (6) so as to then control the inverse movement of the setting means (10) and disengage it from the carriage (6).

2. Actuator as claimed in claim 1,
**characterised in that**
the drive shaft (4) supports an arm (71), the end of which is hooked to the tension spring (5), the other end of which is connected to the casing (1).

3. Actuator as claimed in claim 1,
**characterised in that**
the carriage (6) is guided by a rail of the casing.

4. Actuator as claimed in claim 1,
**characterised in that**
the link between the shaft (4) and the carriage (6) causing them to move in unison comprises the toothed wheel (7) borne by the drive shaft (4) and a rack (8) borne by the carriage (6).

5. Actuator as claimed in claim 1,
**characterised in that**
the setting means (10) comprises
- a slide (101) of the carriage (6), parallel with the direction of translation (XX) of the carriage and
- an electric driving means (102, 103) with a screw bearing a slide block (105) engaged in the slide (101) in order to pull the carriage (6) into its set position and then move backwards so that the carriage (6) is not held and is able to effect the triggering movement.

6. Actuator as claimed in claim 1,
**characterised in that**
the indexing lever (16) is pulled into a locking position by a spring (19).

7. Actuator as claimed in claim 1,
**characterised in that**
the carriage (6) has a cam path (21) co-operating with a cam borne by the crossbar (15) in order to push back one of the trigger elements (14) during the setting movement of the carriage (6).

8. Actuator as claimed in claim 1,
**characterised in that**
the trigger elements (11, 12, 14) are provided in the form of a push rod (27, 30) pushed by a spring (26, 31) towards the crossbar (15) and held in the neutral position by an actuator element (22, 23) releasing the push rod acting on the crossbar (15) in the triggering direction and comprising:
- a fuse (22, 23) exposed to the external or internal temperature to be monitored, the destruction of which fuse releases the push rod,
- an electromagnetic valve (37) which is closed in the absence/presence of current and releases the push rod (39) by an opposite, external electric command,
the various trigger elements (11, 12, 14) acting independently of one another on the crossbar (15).

9. Actuator as claimed in claim 1,
**characterised in that**
the trigger element (13) is provided in the form of a push rod (34) pushed by a spring (35) against a stop holding the push rod in the neutral position, and an actuator element (36) in the form of a handle enabling the push rod to be actuated against the spring and act on the crossbar (15).

10. Actuator as claimed in claims 8 and 9,
**characterised in that**
the push rod is borne by a rod (25, 29, 32, 38) mounted in the casing (1), the spring being mounted on the rod between the push rod and the actuator element subjected to the external event.

11. Actuator as claimed in claim 1,
**characterised in that**
the carriage is connected to a damper secured to the casing in order to regulate the displacement speed of the carriage.

12. Method of controlling a valve actuator, in particular a fire damper, as claimed in one of claims 1 to 11,
**characterised in that**
after placing the trigger elements in the neutral position, the electric jack is commanded to pull the carriage into the setting position until the carriage is locked by the indexing lever, after which the movement of the carriage is released by displacing the guide pulley of the jack which was used to guide the carriage into the set position until it is in a neutral position and is not preventing the triggering movement of the carriage.

## Patentansprüche

1. Stellglied für eine in Entsicherungsposition gebrachte und von einem Auslösebefehl in Verbindung mit einem Ereignis ausgelöste Klappe, insbesondere Feuerklappe, mit
einem Gehäuse (1) und einer von dem Gehäuse (1) getragenen Antriebsachse (4), die mit der Klappe (3) integral ist und mit einer Spannfeder (5) verbunden ist, die in einer Entsicherungsposition durch die Drehbewegung der Achse (4) gespannt ist und in einer aktiven Position die Klappe zurückstellt,
und Auslöseelementen (11-14), die von Ereignissen gesteuert werden, wie Außentemperatur, Innentemperatur, elektrische Auslösung, manuelle Auslösung,
aufweisend:
einen translationsgeführten Wagen (6), der sich über eine Zahnrad/Zahnstange-Verbindung (7,8) gemeinsam mit der Antriebsachse (4) bewegt,
**dadurch gekennzeichnet, daß** der Wagen mit einem Entsicherungsanschlag (9) versehen ist und
dadurch, daß das Stellglied aufweist:
- eine Entsicherungseinrichtung (10), die über eine lösbare Verbindung (101,102,105) mit dem Wagen (6) verbunden ist, sobald der Wagen (6) in der Entsicherungsposition ist,
- einen von dem Gehäuse (1) getragenen Verstellhebel (16), der mit dem Anschlag (9) des Wagens (6) zusammenwirkt, um den Wagen in der Entsicherungsposition zu halten,
- ein in dem Gehäuse (1) drehbar angebrachtes Ortscheit (15), dessen Enden (151,152) der Wirkung mindestens eines Auslöseelements (11-14) unterworfen sind und das mit dem Verstellhebel (16) zusammenwirkt, um ihn im Ereignisfall zu neutralisieren und den Wagen freizugeben,
- eine Steuerschaltung mit einem Stromdetektor und einer Auswerteschaltung des Schwellentyps, wobei der Stromdetektor den Betriebsstrom der Entsicherungseinrichtung (10) detektiert, um ihn mit einer Schwelle zu vergleichen und auf diese Weise die Endposition des Hubs der Entsicherungseinrichtung (10) und des Wagens (6) zu detektieren, um anschließend die inverse Bewegung der Entsicherungseinrichtung (10) zu steuern und sie von dem Wagen (6) zu trennen.

2. Stellglied nach Anspruch 1, **dadurch gekennzeichnet, daß** die Antriebsachse (4) einen Arm (71) trägt, ein Ende dessen in die Spannfeder (5) eingehängt ist, deren anderes Ende mit dem Gehäuse (1) verbunden ist.

3. Stellglied nach Anspruch 1, **dadurch gekennzeichnet, daß** der Wagen (6) von einer Schiene des Gehäuses geführt wird.

4. Stellglied nach Anspruch 1, **dadurch gekennzeichnet, daß** die eine gemeinsame Bewegung erlaubende Verbindung zwischen der Achse (4) und dem Wagen (6) durch ein von der Antriebsachse (4) getragenes Zahnrad (7) und eine von dem Wagen (6) getragene Zahnstange (8) verwirklicht ist.

5. Stellglied nach Anspruch 1, **dadurch gekennzeichnet, daß** die Entsicherungseinrichtung (10) aufweist:
- eine Gleitbahn (101) des Wagens (6), die parallel zur Translationsrichtung (XX) des Wagens ist, und
- eine elektrische Schneckenantriebseinrichtung (102,103), die einen in die Gleitbahn (101) eingreifenden Schieber trägt, um den Wagen (6) in seine Entsicherungsposition zu ziehen, dann umzukehren, um den Wagen (6) nicht zurückzuhalten und ihm zu erlauben, die Auslösebewegung durchzuführen.

6. Stellglied nach Anspruch 1, **dadurch gekennzeichnet, daß** der Verstellhebel (16) mit Hilfe einer Feder (19) in eine Verriegelungsposition gezogen wird..

7. Stellglied nach Anspruch 1, **dadurch gekennzeichnet, daß** der Wagen (6) einen Nockenweg (21) aufweist, der mit einem von dem Ortscheit (15) getragenen Nocken zusammenwirkt, um bei der Entsicherungsbewegung des Wagens (6) eines der Auslöseelemente (14) zurückzustoßen.

8. Stellglied nach Anspruch 1, **dadurch gekennzeichnet, daß** die Auslöseelemente (11,12,14) aus einem Stößel (27,30) bestehen, der von einer Feder (26,31) zu dem Ortscheit (15) hin gedrückt wird und von einem Betätigungselement (22,23) in neutraler Position gehalten wird, das den auf das Ortscheit (15) im Sinne der Auslösung einwirkenden Stößel freigibt und besteht aus:
- einer Sicherung (22,23), die der zu überwachenden Außen- oder Innentemperatur ausgesetzt ist, wobei die Zerstörung der Schmelzsicherung den Stößel freigibt,
- einem elektromagnetischen Ventil (37), das bei Abwesenheit/Anwesenheit von Strom den Stößel (39) anzieht und ihn umgekehrt durch einen externen elektrischen Befehl freigibt,
wobei die verschiedenen Auslöseelemente (11,12,14) voneinander unabhängig auf das Ortscheit (15) einwirken.

9. Stellglied nach Anspruch 1, **dadurch gekennzeichnet, daß** das Auslöseelement (13) aus einem Stößel (34) besteht, der von einer Feder (35) gegen einen Anschlag gedrückt wird, der den Stößel in einer neutralen Position hält, sowie aus einem Betätigungselement (36) besteht, das aus einem Knopf besteht, der erlaubt, den Stößel gegen die Feder zu betätigen und auf das Ortscheit (15) einzuwirken.

10. Stellglied nach den Ansprüchen 8 und 9, **dadurch gekennzeichnet, daß** der Stößel von einer in dem Gehäuse (1) angebrachten Stange (25,29,32,38) getragen wird, wobei die Feder an der Stange zwischen dem Stößel und dem Betätigungselement, das dem externen Ereignis unterworfen ist, angebracht ist.

11. Stellglied nach Anspruch 1, **dadurch gekennzeichnet, daß** der Wagen mit einem an dem Gehäuse angebrachten Dämpfer verbunden ist, um die Verschiebungsgeschwindigkeit des Wagens zu regulieren.

12. Verfahren zur Steuerung eines Stellglieds einer Klappe, insbesondere einer Feuerklappe, nach einem der Ansprüche 1 bis 11, **dadurch gekennzeichnet, daß**
nach Zurücksetzen der Auslöseelemente in neutrale Position die elektrisches Schraubwinde gesteuert wird, um den Wagen in die Entsicherungsposition zu ziehen, bis zu der Verriegelung des Wagens durch den Verstellhebel,
dann die Bewegung des Wagens freigegeben wird, indem die Rolle des Schraubwinde, die dazu gedient hat, den Wagen in die Entsicherungsposition zu fahren, bis in eine neutrale Position verschoben wird, die die Auslösebewegung des Wagens nicht unterdrückt.
